# EUROPEAN PATENT APPLICATION

(11) **EP 2 334 132 A1**
(43) Date of publication of application: **15.06.2011**
(21) Application number: 09814532.9
(22) Date of filing: 11.09.2009
(51) Int. Cl.: H04W 72/04, H04B 7/04, H04J 11/00, H04J 99/00, H04W 16/28, H04W 88/06

(54) **MOBILE STATION DEVICE, MOBILE COMMUNICATION SYSTEM, AND TRANSMISSION METHOD**

(30) Priority: 19.09.2008 JP 2008241423
(71) Applicant: Sharp Kabushiki Kaisha, Osaka-shi, Osaka 545-8522 (JP)
(72) Inventor: KATO, Yasuyuki, Osaka 545-8522 (JP); YAMADA, Shohei, Osaka 545-8522 (JP); OH, Waho, Osaka 545-8522 (JP)
(74) Representative: Müller - Hoffmann & Partner
(86) International application number: PCT/JP2009/065914
(87) International publication number: WO 2010/032687

(57) **Abstract**

To transmit all the data at a time, while controlling the PAPR to within low levels in a simplified configuration when a response to downlink data, downlink CQI and request for uplink data transmission are made at the same time, a mobile station apparatus 1-1 transmits data to at least one of base station apparatuses using one of a plurality of single-carriers each having a predetermined frequency bandwidth in a system band, and has a plurality of transmission sections 10-1, 10-2 each of which transmits one single-carrier independently of one another, and a transmission data control section 20 that controls so that each of the transmission sections 10-1, 10-2 transmits one physical channel using one of the single-carriers having mutually different frequency bands at a predetermined time interval.

## Description

### Technical Field

The present invention relates to a mobile station apparatus for transmitting data to a base station apparatus using one of a plurality of single-carriers each having a predetermined frequency bandwidth in a system band, and mobile communication system and transmission method using the apparatus.

### Background Art

Conventionally, in 3GPP (3rd Generation Partnership Project), the W-CDMA system has been standardized as the 3rd-generation cellular mobile communication system, and the service has sequentially started. Further, HSDPA with further increased communication rates has also been standardized, and the service has started. Meanwhile, 3GPP has been developing standardization of evolution (Evolved Universal Terrestrial Radio Access: hereinafter, referred to as "EUTRA") of the 3rd-generation radio access. In EUTRA, as a downlink communication system, adopted is the OFDM (Orthogonal Frequency Division Multiplexing) system that is high in multipath interference and suitable for high-speed transmission. Further, as an uplink communication system, adopted is DFT (Discrete Fourier Transform) -Spread OFDM system of SC-FDMA (Single Carrier-Frequency Division Multiple Access) for enabling reductions in PAPR (Peak to Average Power Ratio) of transmission signals in consideration of cost and power consumption in mobile station apparatuses.

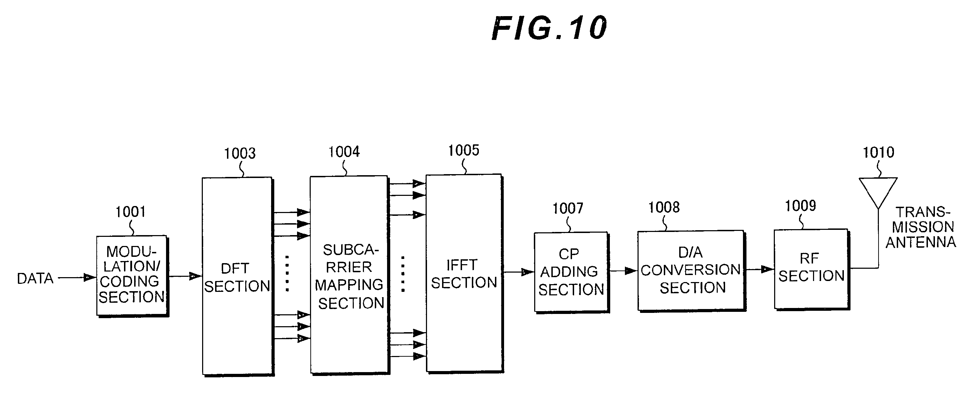

FIG. 10 is a diagram illustrating a configuration of a transmitter adopting the DFT-Spread OFDM system. In the transmitter as shown in FIG. 10, data (transmission bit sequence) is coded and modulated in a modulation/coding section 1001. The modulated signal modulated in the modulation/coding section 1001 is subjected to serial/parallel transform to be parallel, and then, transformed into signals on the frequency axis by a DFT section 1003. Subsequently, the signals on the frequency axis are mapped to each subcarrier by a subcarrier mapping section 1004. At this point, "0" is input to a subcarrier to which the signal is not assigned. Next, the mapped transmission signals on the frequency axis are transformed into signals on the time axis by an IFFT (Inverse Fast Fourier Transform) section 1005, and are subjected to parallel/serial transform, and the signals on the time axis are orthogonalized. A CP (Cyclic Prefix) adding section 1007 inserts CP in the orthogonalized signal. The CP-inserted signal is converted into an analog signal by a D/A conversion section 1008, and is up-converted into a signal of a radio frequency by an RF section 1009, and the signal is transmitted from a transmission antenna 1010.

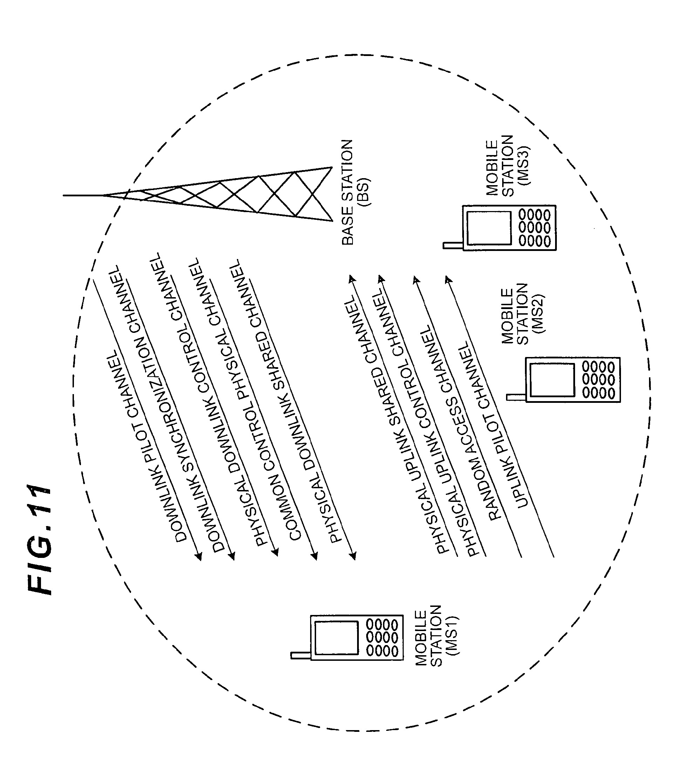

FIG. 11 is a diagram showing uplink and downlink channels in EUTRA. The downlink of EUTRA is comprised of the Downlink Pilot Channel DPiCH, Downlink Synchronization Channel DSCH, Physical Downlink Shared Channel PDSCH, Physical Downlink Control Channel PDCCH, and Common Control Physical Channel CCPCH.

Meanwhile, the uplink of EUTRA is comprised of the Uplink Pilot Channel UPiCH, Random Access Channel RACH, Physical Uplink Shared Channel PUSCH, and Physical Uplink Control Channel PUCCH (Non-patent Document 1). The Physical Uplink Control Channel PUCCH is assigned to each mobile station apparatus for a response to downlink data transmitted from a base station apparatus to the mobile station apparatus on the Physical Downlink Shared Channel PDSCH, report of downlink CQI (Channel Quality Indicator) indicative of downlink radio propagation path status, and request for uplink data transmission from the mobile station apparatus.

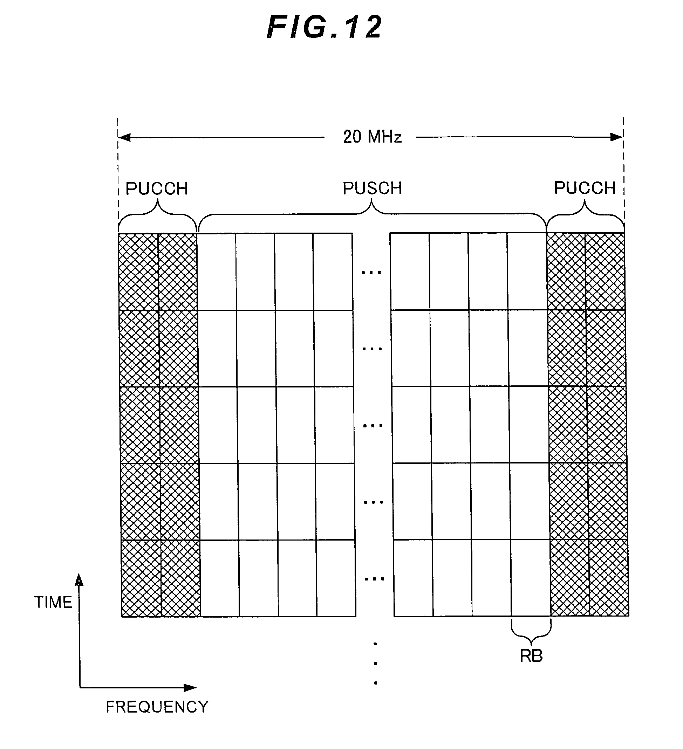

FIG. 12 is a diagram illustrating a channel configuration in uplink. In addition, FIG. 12 does not show the RandomAccess Channel PRACH and Uplink Pilot Channel UPiCH. As shown in FIG. 12, many resource blocks (RBs) each comprised of a plurality of subcarriers exist on the frequency axis, and are arranged so that the Physical Uplink Control Channels PUCCHs are arranged on the end sides of the frequency band and that the Physical Uplink Shared Channel PUSCH is sandwiched between the Physical Uplink Control Channels PUCCHs.

Further, in 3GPP, discussions have started on Advanced-EUTRA that is further evolution of EUTRA. In Advanced-EUTRA, it is expected that communications are performed at transmissions rate of 1 Gbps or more in downlink and of 500 Mbps or more in uplink at the maximum, using bands up to a bandwidth of 100 MHz in each of uplink and downlink.

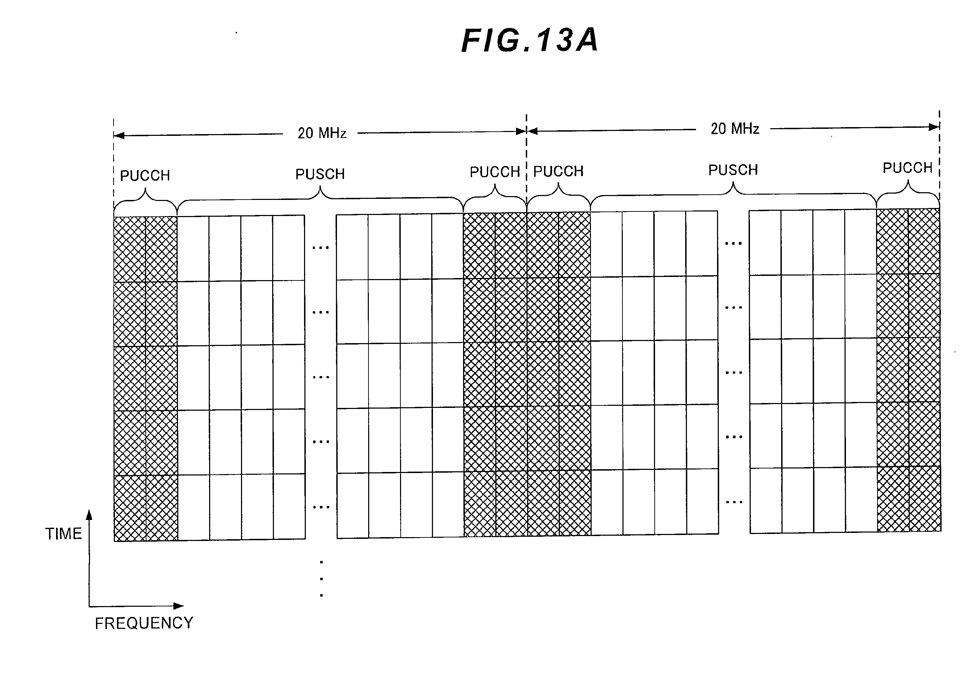

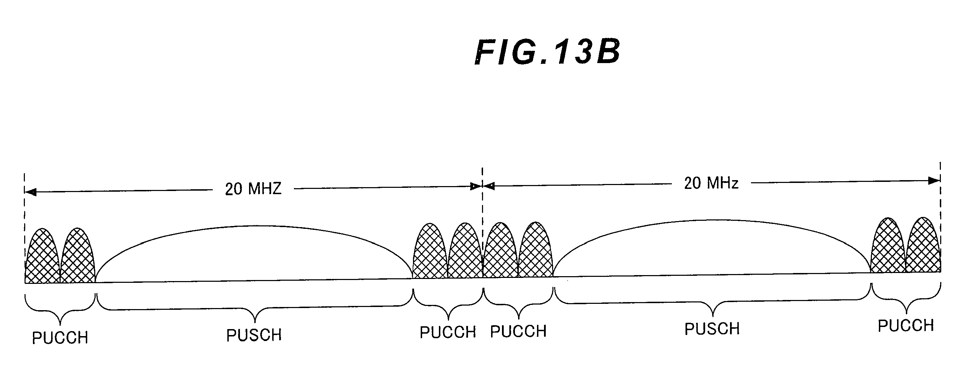

FIGs. 13A and 13B are diagrams illustrating an uplink channel configuration in which two bands of 20 MHz are bound. As shown in FIGs. 13A and 13B, in Advanced-EUTRA, a plurality of bands of 20 MHz of EUTRA is bound so as to accommodate mobile station apparatuses of EUTRA with the aim of further enhancing the transmission rate.

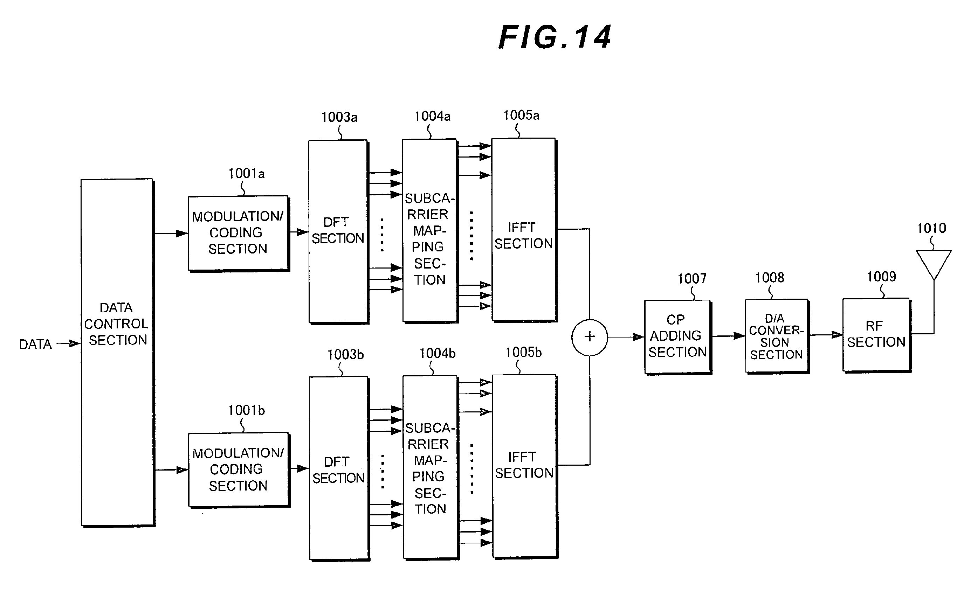

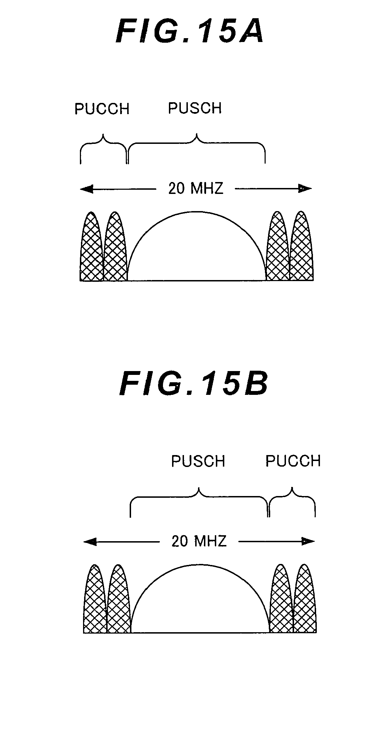

Also in Advanced-EUTRA, in consideration of cost and power consumption in mobile station apparatuses, the SC-FDMA system is proposed which enables reductions in PAPR (Peak to Average Power Ratio) of transmission signals. FIG. 14 is a diagram illustrating a configuration of a mobile station apparatus in uplink proposed in Advanced-EUTRA (Non-patent Document 2). This adopts a configuration for performing the DFT-IFFT processing described in FIG. 10 for each transmission band. In other words, the modulation/coding section 1001a to IFFT section 1005a in FIG. 14 use the transmission band as shown in FIG. 15A. Meanwhile, the modulation/coding section 1001b to IFFT section 1005b in FIG. 14 use the transmission band as shown in FIG. 15B. Then, the signals are combined in the stage prior to insertion of CP, CP is inserted in the signal, and then, the radio signal is transmitted from the antenna in the mobile station apparatus. In addition, in Advanced-EUTRA, MIMO (Multi Input Multi Output) transmission is intended in uplink and downlink. Non-patent Document 1: R1-081948, NTT DoCoMo, "Proposals for LTE-Advanced Technologies", 3GPP TSG RAN WG1 Meeting #53, Kansas City, USA, May 5-9, 2008
Non-patent Document 2: R1-082609, Nokia Siemens Networks, Nokia, "Uplink Multiple access for LTE-Advanced", 3GPP RAN WG1 Meeting #53bis Warsaw, Poland, June 30th-July 4th, 2008

### Disclosure of Invention

### Problems to be Solved by the Invention

However, in the configuration of the transmitter in the mobile station apparatus as shown in FIG. 14, since signals of respective bands are combined before being input to the RF section 1009 (signal amplifier), the PAPR is higher than the PAPR of normal SC-FDMA as shown in FIG. 10, and affects the cost and power consumption in the mobile station apparatus.

Further, in the configuration of the transmitter as shown in FIG. 10, when it is intended to cover the entire transmission band, since the Physical Uplink Control Channel PUCCH exists between the Physical Uplink Shared Channels PUSCHs, it is not possible to concurrently transmit data in the bands of different Physical Uplink Shared Channels PUSCHs from limitations of single-carrier. In other words, the base station apparatus is not able to assign the PUSCH to the mobile station apparatus over the band. Further, similarly, with respect to a response to data on the Physical Downlink Shared Channel to the mobile station apparatus, the base station apparatus is not able to return a plurality of responses. The aforementioned problems can be solved by using multicarrier such as OFDM, but another problem arises that the PAPR is higher than that in the configuration of the transmitter as shown in FIG. 14.

Furthermore, in the current EUTRA system, since the uplink transmission method is of single-carrier, when a response to downlink data, downlink CQI and request for uplink data transmission are made at the same time, such a problem occurs that it is not possible to concurrently transmit all the data at a time.

The present invention was made in view of such circumstances, and it is an object of the invention to provide a mobile station apparatus, mobile communication system and transmission method for enabling all the data to be transmitted at a time, and further enabling the PAPR to be controlled to within low levels in a simplified configuration, when a response to downlink data, downlink CQI and request for uplink data transmission are made at the same time.

### Means for Solving the Problem

(1) To attain the above-mentioned object the present invention took measures as described below. In other words, a mobile station apparatus of the invention is a mobile station apparatus that transmits data to at least one of base station apparatuses using one of a plurality of single-carriers each having a predetermined frequency bandwidth in a system band, and is characterized by having a plurality of transmission sections each of which transmits one single-carrier independently of one another, and a transmission data control section that controls so that the each of the transmission sections transmits one physical channel using one of the single-carriers having mutually different frequency bands at a predetermined time interval.

Thus, control is performed so that each of the transmission sections transmits one physical channel using one of single-carriers having mutually different frequency bands at a predetermined time interval, and therefore, it is possible to concurrently transmit a plurality of items of data while maintaining single-carrier characteristics in a simplified configuration. As a result, it is possible to control the PAPR to within low levels, while further controlling cost and power consumption of the apparatus to within low values.

(2) Further, in the mobile station apparatus of the invention, it is a feature that the transmission data control section selects one single-carrier from the number of single-carriers that is the number of transmission sections or less among the plurality of single-carriers having mutually different frequency bands in the system band, and performs control so that one of the transmission sections transmits the selected single-carrier.

Thus, one single-carrier is selected from the number of single-carriers that is the number of transmission sections or less among the plurality of single-carriers having mutually different frequency bands in the system band so that one of the transmission sections transmits the selected single-carrier, and therefore, it is possible to concurrently transmit a plurality of items of data while maintaining single-carrier characteristics. Further, it is possible to perform MIMO transmission using the entire system band. Furthermore, the number of points in IFFT is a low number, and it is possible to reduce the circuit scale.

(3) Further, a mobile communication system of the invention is characterized by being comprised of the mobile station apparatus as described in above-mentioned (1) or (2), and at least one of base station apparatuses.

According to this configuration, control is performed so that each of the transmission sections in the mobile station apparatus transmits one physical channel using one of single-carriers having mutually different frequency bands at a predetermined time interval, and therefore, it is possible to concurrently transmit a plurality of items of data while maintaining single-carrier characteristics in a simplified configuration. As a result, it is possible to control the PAPR to within low levels, while further controlling cost and power consumption of the apparatus to within low values.

(4) Further, a transmission method of the invention is a transmission method in which a mobile station apparatus transmits data to a base station apparatus using one of a plurality of single-carriers each having a predetermined frequency bandwidth in a system band, and is characterized in that each of a plurality of transmission sections each of which transmits one single-carrier independently of one another transmits one physical channel using one of the single-carriers having mutually different frequency bands at a predetermined time interval.

Thus, control is performed so that each of the transmission sections transmits one physical channel using one of single-carriers having mutually different frequency bands at a predetermined time interval, and therefore, it is possible to concurrently transmit a plurality of items of data while maintaining single-carrier characteristics in a simplified configuration. As a result, it is possible to control the PAPR to within low levels, while further controlling cost and power consumption of the apparatus to within low values.

### Advantageous Effect of the Invention

According to the invention, it is possible to concurrently transmit a plurality of items of data while maintaining single-carrier characteristics in a simplified configuration. As a result, it is possible to control the PAPR to within low levels, while further controlling cost and power consumption of the apparatus to within low values. Brief Description of Drawings

FIG. 1 is a block diagram illustrating a schematic configuration of a mobile station apparatus according to Embodiment 1;
FIG. 2 is a diagram illustrating the system band of the mobile station apparatus;
FIG. 3 is a diagram illustrating a downlink channel configuration;
FIG. 4A is a diagram illustrating an operation example in the case that the mobile station apparatus transmits data in uplink;
FIG. 4B is a diagram illustrating another operation example in the case that the mobile station apparatus transmits data in uplink;
FIG. 5A is a diagram illustrating still another operation example in the case that the mobile station apparatus transmits data in uplink;
FIG. 5B is a diagram illustrating still another operation example in the case that the mobile station apparatus transmits data in uplink;
FIG. 5C is a diagram illustrating still another operation example in the case that the mobile station apparatus transmits data in uplink;
FIG. 6 is a block diagram illustrating a schematic configuration of a mobile station apparatus according to Embodiment 2;
FIG. 7A is a diagram illustrating the system band of the mobile station apparatus according to Embodiment 2;
FIG. 7B is another diagram illustrating the system band of the mobile station apparatus according to Embodiment 2;
FIG. 8 is a block diagram illustrating a schematic configuration of a mobile station apparatus according to Embodiment 3;
FIG. 9A is a diagram illustrating the system band of the mobile station apparatus according to Embodiment 3;
FIG. 9B is another diagram illustrating the system band of the mobile station apparatus according to Embodiment 3;
FIG. 10 is a diagram illustrating a configuration of a transmitter adopting the DFT-Spread OFDM system;
FIG. 11 is a diagram illustrating uplink and downlink channels in EUTRA;
FIG. 12 is a diagram illustrating an uplink channel configuration;
FIG. 13A is a diagram illustrating an uplink channel configuration in which two bands of 20 MHz are bound;
FIG. 13B is another diagram illustrating the uplink channel configuration in which two bands of 20 MHz are bound;
FIG. 14 is a diagram illustrating a configuration of a mobile station apparatus in uplink proposed in Advanced-EUTRA;
FIG. 15A is a diagram illustrating the transmission band used by the modulation/coding section 1001a to IFFT section 1005a as shown in FIG. 14;
FIG. 15B is a diagram illustrating the transmission band used by the modulation/coding section 1001b to IFFT section 1005b as shown in FIG. 14;
FIG. 16 is a diagram illustrating network MIMO;
FIG. 17 is a diagram illustrating a downlink channel configuration;
FIG. 18 is a diagram illustrating an operation example in the case that the mobile station apparatus transmits data in uplink;
FIG. 19A is a diagram illustrating another operation example in the case that the mobile station apparatus transmits data in uplink;
FIG. 19B is a diagram illustrating still another operation example in the case that the mobile station apparatus transmits data in uplink; and
FIG. 19C is a diagram illustrating still another operation example in the case that the mobile station apparatus transmits data in uplink.

### Description of Symbols

1-1, 1-2, 1-3 Mobile station apparatus
10-1, 10-2 Transmission section
11-1, 11-2 Modulation/coding section
12-1, 12-2 DFT section
13-1, 13-2 Subcarrier mapping section
14-1, 14-2, N1-point IFFT section
14-3, 14-4, N2-point IFFT section
15-1, 15-2 CP adding section
16-2, 16-2 D/A conversion section
17-1, 17-2 RF section
18-1, 18-2, 18-3 Antenna
20 Transmission data control section
30-1, 30-2, 30-3 RF section
40 OFDM reception section
50 Reception data control section
60 Uplink control section
61 Transmission control section
62 Control data analyzing section
63 Control data generating section
70 RF control section
80 Combining section

### Best Mode for Carrying Out the Invention

### (Embodiment 1)

In this Embodiment, a radio communication system is assumed which uses a channel configuration as shown in FIG. 11 where a plurality of systems with the configuration as shown in FIG. 12 is bound, and is configured as shown in FIG. 13. Described herein is an example in which two basic system bands are bound. Further, the aforementioned system is a system in which it is intended to perform communications using MIMO (Multi Input Multi Output) . In other words, the mobile station apparatus and base station apparatus have a plurality of transmission/reception sections including a plurality of antennas. MIMO described herein means techniques for providing transmission and reception stations with a plurality of antennas, and enabling simultaneous space multiplexing transmission of different signal sequences even in the same frequency interference environment, uses that a plurality of different propagation paths is formed by reflection objects in between transmission and reception stations, and by using in formation of the plurality of transmission paths effectively, is to demodulate a plurality of signal sequences that are spatially multiplexed.

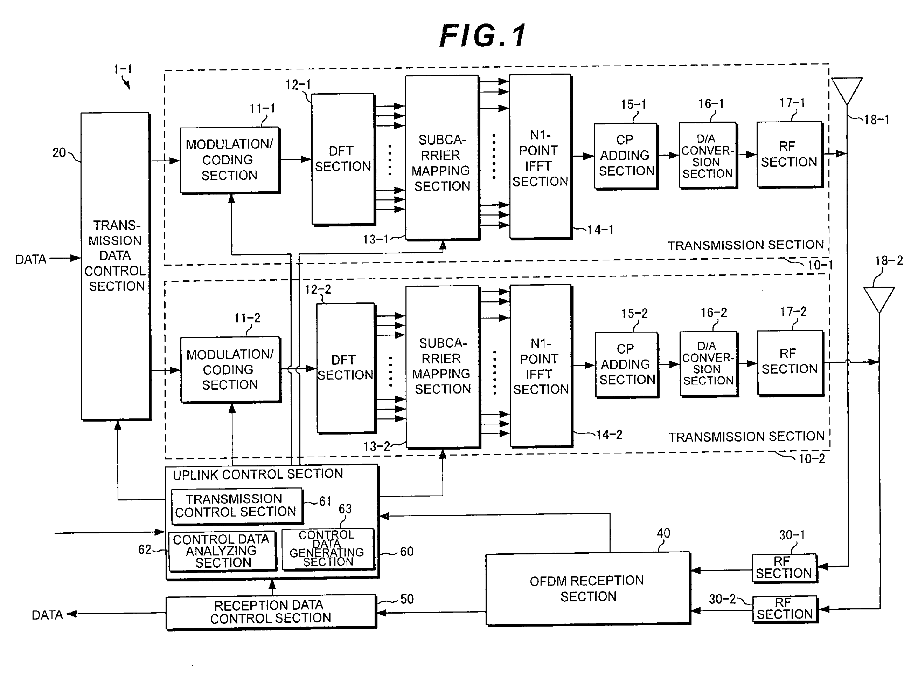

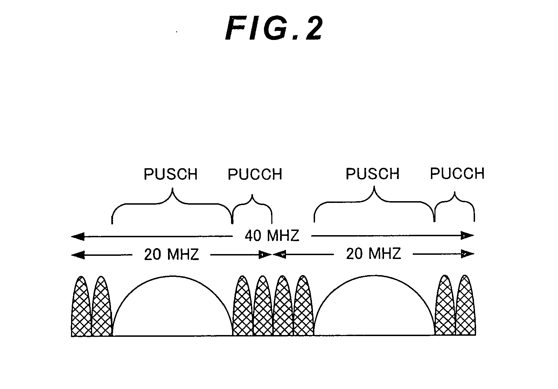

FIG. 1 is a block diagram illustrating a schematic configuration of a mobile station apparatus according to Embodiment 1. Further, FIG. 2 is a diagram illustrating the system band of the base station apparatus and mobile station apparatus. Themobile station apparatus 1-1 according to this Embodiment has a transmission section 10-1 and transmission section 10-2. Each of the transmission sections 10-1 and 10-2 is capable of performing transmission using the frequency band of the entire system band as shown in FIG. 2. The transmission sections 10-1 and 10-2 are provided with modulation/coding sections 11-1, 11-2, DFT (Discrete Fourier Transform) sections 12-1, 12-2, subcarrier mapping sections 13-1, 13-2, N1-point IFFT (Inverse Fast Fourier Transform) sections 14-1, 14-2, CP (Cyclic Prefix) adding sections 15-1, 15-2, D/A conversion sections (digital/analog conversion sections) 16-1, 16-2, RF (Radio Frequency) sections 17-1, 17-2, and antennas 18-1, 18-2, respectively.

Further, the mobile station apparatus 1-1 is provided with a transmission data control section 20, (reception) RF sections 30-1, 30-2, OFDM reception section 40, reception data control section 50, and uplink control section 60. The uplink control section 60 is comprised of a transmission control section 61, control data analyzing section 62, and control data generating section 63.

The data is input to the transmission data control section 20, and the transmission data control section 20 allocates each data to the modulation/coding sections 11-1, 11-2 by instructions from the uplink control section 60. The signal from the transmission data control section 20 is input to the modulation/coding sections 11-1, 11-2, coded, and modulated. The modulated signal is subjected to serial/parallel transform to be parallel, and transformed into signals on the frequency axis by the DFT sections 12-1, 12-2. Subsequently, the signals on the frequency axis are mapped to each subcarrier (each uplink channel) by subcarrier mapping sections 13-1, 13-2. At this point, "0" is input to a subcarrier to which the signal is not assigned.

Next, the mapped transmission signals on the frequency axis are transformed into signals on the time axis by N-1 point IFFT sections 14-1, 14-2, and are subjected to parallel/serial transform, and the signals on the time axis are orthogonalized. The CP adding sections 15-1, 15-2 insert CP in the orthogonalized signals. The CP-inserted signals are converted into analog signals by the D/A conversion sections 16-1, 16-2, and are up-converted into signals of radio frequencies by the RF sections 17-1, 17-2, and the signals are transmitted from the antennas 18-1, 18-2.

In addition, the above-mentioned modulation/coding sections, DFT sections, subcarrier mapping sections, IFFT sections, CP adding sections, D/A conversion sections, RF sections and antennas exist corresponding to the number of transmissions in MIMO, and are included in the transmission section 10-1 and transmission section 10-2. Further, the N1-point IFFT section is IFFT having the number N1 of points enabling the entire system band to be processed.

Further, as described above, the uplink control section 60 is comprised of the transmission control section 61, control data analyzing section 62, and control data generating section 63, generates a response to downlink data received in the reception data control section 50, analyzes scheduling information of uplink data, and based on the scheduling information, etc. controls the transmission data control section 20, modulation/coding sections 11-1, 11-2, and subcarrier mapping sections 13-1, 13-2. The specific operation will be described later.

The RF sections 30-1, 30-2 down-convert radio signals received from the antennas 18-1, 18-2 to output to the OFDM reception section 40. The OFDM reception section 40 performs A/D (analog/digital) conversion on the signals input from the RF sections 30-1, 30-2, further performs FFT (Fast Fourier Transform) processing, decoding, demodulation processing, etc. and outputs the demodulated data to the reception control section 50. Further, the section 40 measures the radio environment of downlink, and outputs the result to the uplink control section 60.

The reception data control section 50 divides the data demodulated in the OFDM reception section 40 into control data and user data. The section 50 outputs the control data to the uplink control section 60, while outputting the user data to the upper layer. Further, section 50 instructs the uplink control section 60 to return a response to the received data.

In the uplink control section 60, when the control data analyzing section 62 receives the scheduling information received from the base station apparatus from the reception data control section 50, it is determined whether transmission is MIMO transmission or single-carrier transmission from the scheduling information. The transmission control section 61 instructs the transmission data control section 20 to select and use the transmission section 10-1 or transmission section 10-2 to transmit the data sequence input from the upper layer. Corresponding to the selection, the section 60 controls the modulation/coding sections 11-1,11-2, and subcarrier mapping sections 13-1, 13-2 of the transmission sections 10-1, 10-2, respectively.

The control data generating section 63 generates a response to the downlink reception data, downlink CQI (Channel Quality Indicator) indicative of radio propagation path status in downlink, request for uplink data transmission, etc. and instructs the transmission control section 61 to controls each of the transmission sections 10-1, 10-2. The transmission control section 61 controls each of the transmission sections 10-2, 10-2 so as to map to each uplink channel (Physical Uplink Shared Channel PUSCH and Physical Uplink Control Channel PUCCH) to transmit the data to the base station apparatus.

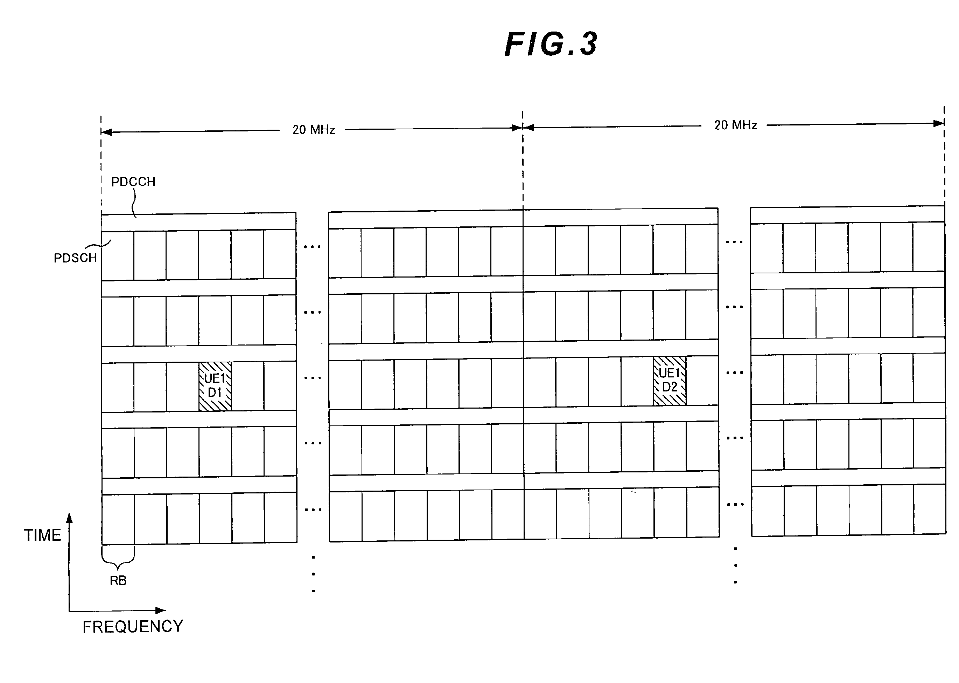

FIG. 3 is a diagram illustrating a downlink channel configuration. FIG. 3 shows the case where the base station apparatus assigns two items of data to the mobile station apparatus in downlink, and the mobile station apparatus receives the data. Herein, in the case of single-carrier transmission, it is not possible to transmit a response to each of the items of data. In transmitting the response, two responses are made a single response to be transmitted. In this case, when the control data generating section 63 of the uplink control section 60 acquires the data reception information from the reception data control section 50, the section 63 instructs the transmission data control section 20 to return responses at positions of two uplink control channels.

The control data generating section 63 generates a response to the downlink data, and outputs the response data to the transmission control section 20. Further, the section 63 sets each of the modulation/coding sections 11-1, 11-2 for a modulation scheme and code rate, and gives instructions for the arrangement of the response data to each of the subcarrier mapping sections 13-1, 13-2.

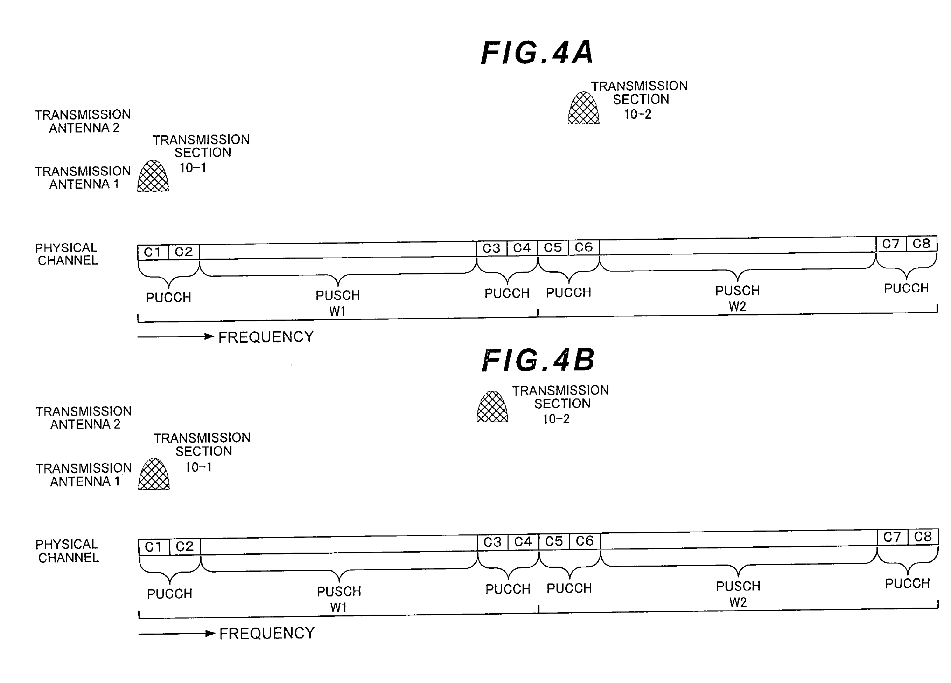

FIGs. 4A and 4B are diagrams illustrating operation examples in the case that the mobile station apparatus transmits the control data in uplink. The mobile station apparatus 1-1 (UE1) receives the downlink data (D1, D2) at the positions of PDSCH as shown in FIG. 3. When both of data reception succeeds or fails, the reception data control section 50 instructs the uplink control section 60 to transmit a response (success/failure) to D1 at the position of C1 as shown in FIG. 4A, and further transmit a response (success/failure) to D2 at the position of C6 as shown in FIG. 4A. The control data generating section 63 of the uplink control section 60 generates the responses to the downlink data instructed from the reception data control section 50, and outputs the generated response data to the transmission data control section 20.

Then, the control data generating section 63 instructs the transmission data control section 20 to transmit the response data to D1 using the transmission section 10-1, and further transmit the response data to D2 using the transmission section 10-2, gives instructions for modulation and code rate to the modulation/coding sections 11-1, 11-2, and instructs the subcarrier mapping sections 13-1, 13-2 to map the response data to C1 and C6. Then, each of the transmission sections 10-1, 10-2 transmits the response data.

Further, the example as shown in FIG. 4B is similar to that in FIG. 4A. In other words, in FIG. 4B, the response data to D1 as shown in FIG. 3 is transmitted at the position of C1. Meanwhile, the response data to D2 as shown in FIG. 3 is transmitted at the position of C3.

In addition, this Embodiment shows the configuration with two antennas, and the case of three or more antennas is in the same manner.

As described above, according to this Embodiment, it is possible to concurrently transmit two or more responses. In other words, when uplink control data such as a response to downlink data, downlink CQI and request for uplink data transmission occurs at the same time and the concurrently occurring control data is desired to be transmitted at the same time, by using separate transmission sections, it is possible to concurrently transmit different uplink control data at different locations. Further, since the different transmission sections are used, each of the transmission sections performs single-carrier transmission. By this means, it is possible to control the PAPR to within low levels.

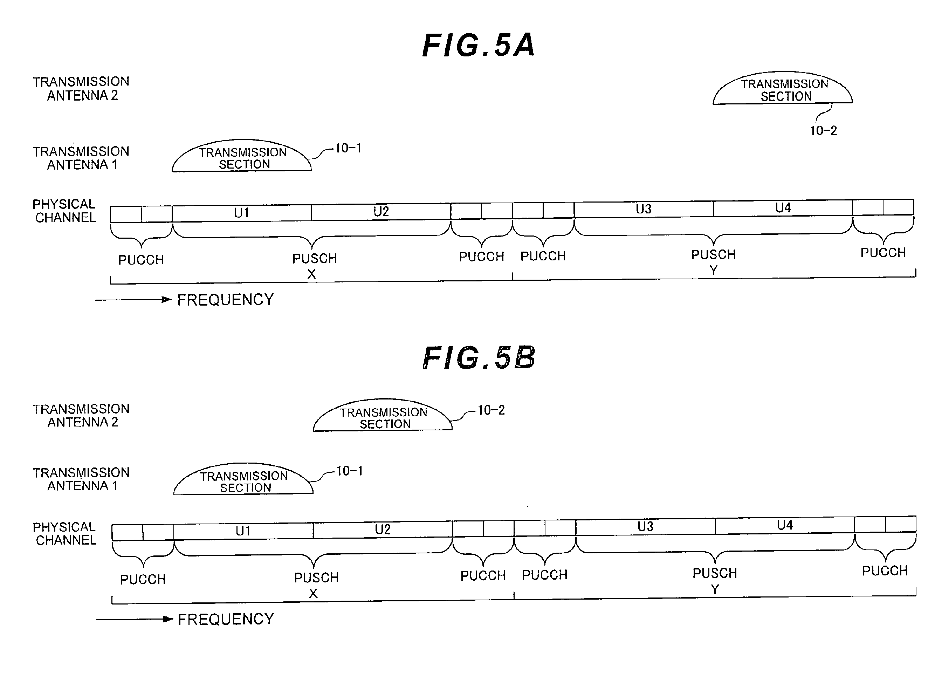

Described next is the case that the mobile station apparatus transmits uplink data. FIGs. 5A to 5C are diagrams illustrating operation examples in the case that the mobile station apparatustransmitsdatain uplink. First, the mobile station apparatus 1-1 (UE1) is instructed from the base station apparatus to transmit the uplink data at the positions as shown in FIG. 5A. In other words, the apparatus 1-1 receives uplink scheduling information assigned to the Physical Downlink Control Channel PDCCH. The reception data control section 50 outputs the control data of the Physical Downlink Control Channel PDCCH to the uplink control section 60. The control data analyzing section 62 of the uplink control section 60 analyzes the control data of the Physical Downlink Control Channel. When the control data analyzing section 62 determines that it is possible to transmit the data on U1 and U4 as a result of analysis, the section 62 outputs the arrangement information and modulation/coding information of the uplink transmission data to the transmission control section 61 of the uplink control section 60. The transmission control section 61 instructs the transmission data control section 20 to transmit the position U1 using the transmission section 10-1, and further transmit U4 using the transmission section 10-2. Then, the section 61 gives instructions for modulation/code rate to the modulation/coding sections 11-1, 11-2, and gives instructions for the positions to map the uplink data to the subcarrier mapping sections 13-1, 13-2. Then, each of the transmission sections transmits the uplink transmission data.

Further, the example as shown in FIG. 5B is similar to that in FIG. 5A. In other words, in FIG. 5B, the mobile station apparatus 1-1 (UE1) is instructed to transmit the uplink data at the positions as shown in FIG. 5B from the base station apparatus. Then, the mobile station apparatus transmits the position U1 using the transmission section 10-1, while transmitting U2 using the transmission section 10-2.

In addition, this Embodiment shows the configuration with two antennas, and the case of three or more antennas is in the same manner.

As described above, according to this Embodiment, it is possible to concurrently transmit two or more items of data at different locations. Further, since the different transmission sections are used, each of the transmission sections performs single-carrier transmission. By this means, it is possible to control the PAPR to within low levels.

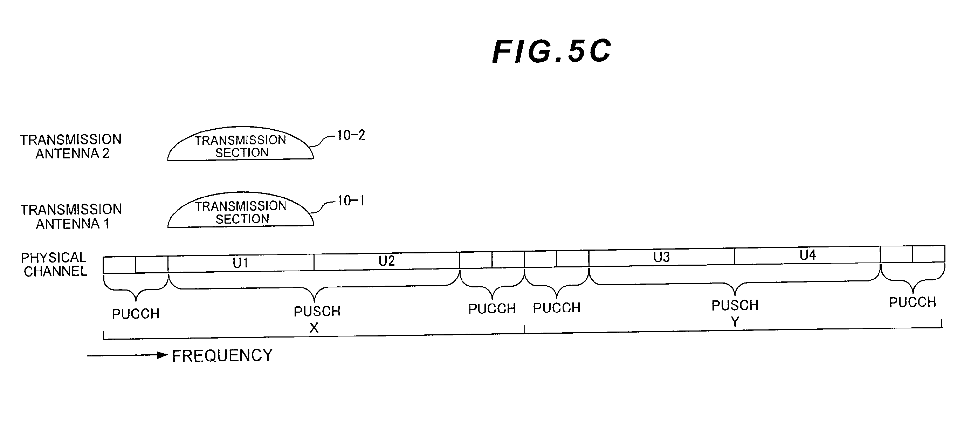

Described next is the case of transmitting uplink data in normal MIMO. As shown in FIG. 5C, the mobile station apparatus 1-1 (UE1) is instructed to transmit the uplink data in MIMO at the location as shown in FIG. 5C from the base station apparatus. In other words, the apparatus 1-1 receives uplink scheduling information assigned to the Physical Downlink Control Channel PDCCH. The reception data control section 50 outputs the control data of the Physical Downlink Control Channel PDCCH to the uplink control section 60. The control data analyzing section 62 of the uplink control section 60 analyzes the control data of the Physical Downlink Control Channel. When the control data analyzing section 62 determines that it is possible to transmit the data on U1 using MIMO as a result of analysis, the section 62 outputs the arrangement information and modulation/coding information of the uplink transmission data to the transmission control section 61 of the uplink control section 60. The transmission control section 61 instructs the transmission data control section 20 to transmit the position U1 using the transmission section 10-1, and similarly transmit U1 using the transmission section 10-2. Then, the section 61 gives instructions for modulation/code rate to the modulation/coding sections 11-1, 11-2, and further gives instructions for coding for MIMO. The section 61 gives instructions for the position to map the uplink data to the subcarrier mapping sections 13-1, 13-2. Then, each of the transmission sections transmits the uplink transmission data.

As described above, according to this Embodiment, by adaptively controlling the transmission sections that perform MIMO transmission using a plurality of antennas, it is possible to concurrently transmit a plurality of items of data while maintaining single-carrier characteristics.

### (Embodiment 2)

In above-mentioned Embodiment 1, each of the transmission sections covers the entire system band. In contrast thereto, Embodiment 2 adopts the constitution where each of the transmission sections covers only a mutually independent band, and the transmission sections cover the entire system band in cooperation with each other.

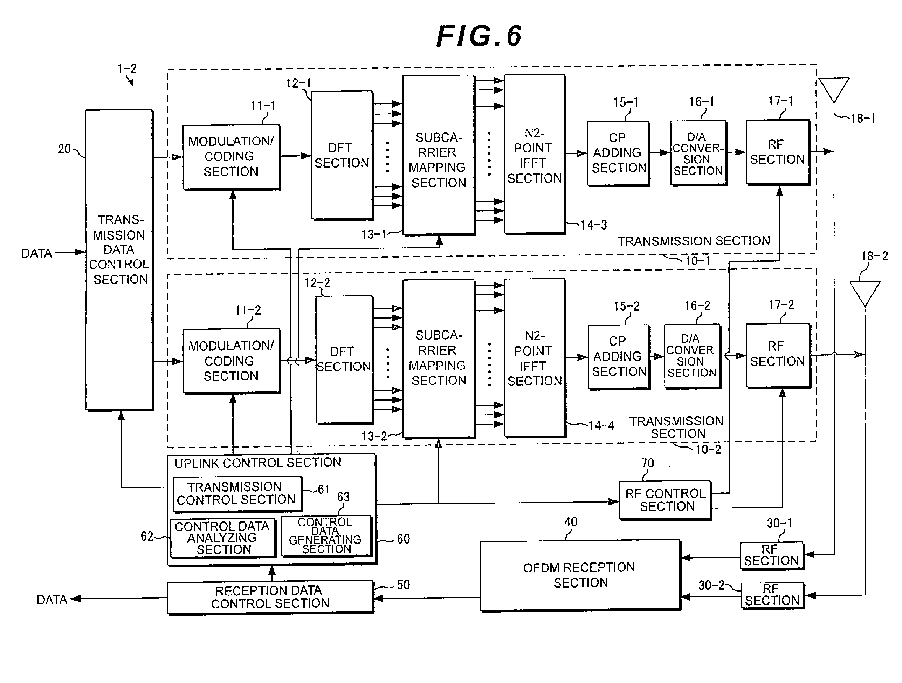

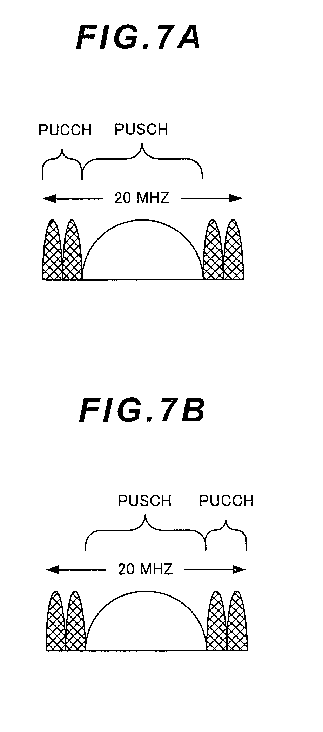

FIG. 6 is a block diagram illustrating a schematic configuration of a mobile station apparatus according to Embodiment 2. Further, FIGs. 7A and 7B are diagrams illustrating the system band of the mobile station apparatus according to Embodiment 2. The base station apparatus is configured to receive the system band as shown in FIG. 3 as in Embodiment 1. Then, as shown in FIG. 6, the mobile station apparatus according to Embodiment 2 has two transmission sections (10-1, 10-2). The transmission section 10-1 is capable of performing transmission using the basic system band as shown in FIG. 7A, and the transmission section 10-2 is capable of performing transmission using the basic system band as shown in FIG. 7B. Then, by using two transmission sections 10-1, 10-2, it is possible to perform transmission in the entire system band.

As shown in FIG. 6, as in the mobile station apparatus 1-1 according to Embodiment 1 as shown in FIG. 1, the mobile station apparatus 1-2 according to Embodiment 2 is comprised of the transmission data control section 20, modulation/coding sections 11-1, 11-2, DFT (Discrete Fourier Transform) sections 12-1, 12-2, subcarrier mapping sections 13-1, 13-2, N2-point IFFT (Inverse Fast Fourier Transform) sections 14-3, 14-4, CP (Cyclic Prefix) adding sections 15-1, 15-2, D/A (digital/analog) conversion sections 16-1, 16-2, RF (Radio Frequency) sections 17-1, 17-2, antennas 18-1, 18-2, (reception) RF sections 30-1, 30-2, OFDM reception section 40, reception data control section 50, uplink control section 60, and RF control section 70. The uplink control section 60 is comprised of the transmission control section 61, control data analyzing section 62, and control data generating section 63.

The difference from Embodiment 1 as shown in FIG. 1 is having N2-point IFFT sections 14-3, 14-4. Further, the RF control section 70 controls the frequencies used in the RF sections 17-1, 17-2 by instructions from the uplink control section 60. Each of the RF sections up-converts the signal into a signal of the radio frequency designated from the RF control section 70, and the data is transmitted from the antennas 18-1 18-2 of the transmission sections 10-2, 10-2, respectively.

In addition, modulation/coding sections, DFT sections, subcarrier mapping sections, IFFT sections, CP adding sections, D/A conversion sections, RF sections and antennas exist corresponding to the number of basic system bands. Further, the N2-point IFFT sections are IFFT having the number N2 of points enabling part of the system band to be processed, and process the entire system band by having a plurality of transmission systems.

In downlink, as shown in FIG. 3, when the base station apparatus assigns two items of data to the mobile station apparatus in downlink, and the mobile station apparatus receives the data and transmits a response by single-carrier, it is not possible to transmit a response to each of the items of data. In transmitting the response, two responses are made a single response to be transmitted. In this case, when the control data generating section 63 of the uplink control section 60 acquires the data reception information from the reception data control section 50, the section 63 instructs the transmission data control section 20 to return responses at two positions. The control data generating section 63 generates a response (success/failure) to the downlink data, and outputs the response data to the transmission control section 20. Further, the section 63 sets each of the modulation/coding sections 11-1, 11-2 for a modulation scheme and code rate, and gives instructions for the arrangement of the response data to each of the subcarrier mapping sections 13-1, 13-2.

Specific descriptions are given with reference to FIGs. 3, 4A and 4B. The mobile station apparatus 1-2 (UE1) receives the downlink data (D1, D2) at the positions of PDSCH as shown in FIG. 3. When both of data reception succeeds or fails, the reception data control section 50 instructs the uplink control section 60 to transmit a response (success/failure) to D1 at the position of C1 as shown in FIG. 4A, and further transmit a response (success/failure) to D2 at the position of C6 as shown in FIG. 4A. The control data generating section 63 of the uplink control section 60 generates the responses to the downlink data instructed from the reception data control section 50, and outputs the generated response data to the transmission data control section 20.

Then, the control data generating section 63 instructs the transmission data control section 20 to transmit the response data to D1 using the transmission section 10-1, and further transmit the response data to D2 using the transmission section 10-2, gives instructions for modulation and code rate to the modulation/coding sections 11-1, 11-2, and instructs the subcarrier mapping sections 13-1, 13-2 to map the response data to C1 and C6. Further, the control data generating section 63 of the uplink control section 60 instructs the RF control section 70 to set the transmission section 10-1 for a frequency w1, and further set the transmission section 10-2 for a frequency w2. Then, each of the transmission sections 10-1, 10-2 transmits the response data.

Moreover, the example as shown in FIG. 4B is similar to that in FIG. 4A. In other words, the RF control section 70 sets the transmission section 10-1 for the frequency w1, while setting the transmission section 10-2 for the frequency w2. Then, the response data to D1 as shown in FIG. 3 is transmitted at the position of C1. Meanwhile, the response data to D2 as shown in FIG. 3 is transmitted at the position of C3.

In addition, this Embodiment shows the configuration with two antennas, and the case of three or more antennas is in the same manner.

As described above, according to this Embodiment, it is possible to concurrently transmit two or more responses. In other words, when uplink control data such as a response to downlink data, downlink CQI and request for uplink data transmission occurs at the same time and the concurrently occurring control data is desired to be transmitted at the same time, by using separate transmission sections, it is possible to concurrently transmit different uplink control data at different locations. Further, since the different transmission sections are used, each of the transmission sections performs single-carrier transmission. By this means, it is possible to control the PAPR to within low levels.

Referring to FIGs. 5A to 5C, described next is the case that the mobile station apparatus transmits uplink data. The mobile station apparatus 1-2 (UE1) is instructed from the base station apparatus to transmit the uplink data at the positions as shown in FIG. 5A. In other words, the apparatus 1-2 receives uplink scheduling information assigned to the Physical Down link Control Channel PDCCH. The reception data control section 50 outputs the control data of the Physical Downlink Control Channel PDCCH to the uplink control section 60. The control data analyzing section 62 of the uplink control section 60 analyzes the control data of the Physical Downlink Control Channel. When the control data analyzing section 62 determines that it is possible to transmit the data on U1 and U4 as a result of analysis, the section 62 outputs the arrangement information and modulation/coding information of the uplink transmission data to the transmission control section 61 of the uplink control section 60.

The transmission control section 61 instructs the transmission data control section 20 to transmit the position U1 using the transmission section 10-1, and further transmit U4 using the transmission section 10-2. Then, the section 61 gives instructions for modulation/code rate to the modulation/coding sections 11-1, 11-2, and gives instructions for the positions to map the uplink data to the subcarrier mapping sections 13-1, 13-2. Further, the control data generating section 63 of the uplink control section 60 instructs the RF control section 70 to set the transmission section 10-1 for the frequency w1, and further set the transmission section 10-2 for the frequency w2. Then, each of the transmission sections 10-1, 10-2 transmits the uplink transmission data.

Further, the example as shown in FIG. 5B is similar to that in FIG. 5A. In other words, in FIG. 5B, the mobile station apparatus 1-2 (UE1) is instructed to transmit the uplink data at the positions as shown in FIG. 5B from the base station apparatus. The RF control section 70 sets the transmission section 10-1 for the frequency w1, while setting the transmission section 10-2 for the frequency w2. Then, the mobile station apparatus transmits the position U1 using the transmission section 10-1, while transmitting U2 using the transmission section 10-2.

In addition, this Embodiment shows the configuration with two antennas, and the case of three or more antennas is in the same manner.

As described above, according to this Embodiment, it is possible to concurrently transmit two or more items of data at different locations. Further, since the different transmission sections are used, each of the transmission sections performs single-carrier transmission. By this means, it is possible to control the PAPR to within low levels.

Described next is the case of transmitting uplink data in normal MIMO. As shown in FIG. 5C, the mobile station apparatus 1-2 (UE1) is instructed to transmit the uplink data in MIMO at the location as shown in FIG. 5C from the base station apparatus. In other words, the apparatus 1-2 receives uplink scheduling information assigned to the Physical Downlink Control Channel PDCCH. The reception data control section 50 outputs the control data of the Physical Downlink Control Channel PDCCH to the uplink control section 60.

The control data analyzing section 62 of the uplink control section 60 analyzes the control data of the Physical Downlink Control Channel. When the control data analyzing section 62 determines that it is possible to transmit the data on U1 using MIMO as a result of analysis, the section 62 outputs the arrangement information and modulation/coding information of the uplink transmission data to the transmission control section 61 of the uplink control section 60. The transmission control section 61 instructs the transmission data control section 20 to transmit the position U1 using the transmission section 10-1, and similarly transmit U1 using the transmission section 10-2. Then, the section 61 gives instructions for modulation/code rate to the modulation/coding sections 11-1, 11-2, and further gives instructions for coding for MIMO. The section 61 gives instructions for the position to map the uplink data to the subcarrier mapping sections 13-1, 13-2.

The control data generating section 63 of the uplink control section 60 instructs the RF control section 70 to set the transmission section 10-1 and the transmission section 10-2 for the frequency w1. The RF control section 70 instructs each of the RF sections 17-1, 17-2 to set the band of the designated frequency. The RF sections 17-1, 17-2 up-convert the signals to signals of the designated radio frequency. Then, each of the transmission sections 10-1, 10-2 transmits the uplink transmission data.

Thus, it is possible to perform single-carrier transmission for each band, while covering the entire system band, and to enable the mobile station apparatus to perform MIMO transmission. Further, the number of points of IFFT can be decreased, and it is thereby possible to reduce the circuit scale.

### (Embodiment 3)

Embodiment 1 and Embodiment 2 show the examples using a plurality of antennas, and Embodiment 3 shows an example in which a single antenna is used. Further, as in Embodiment 2, Embodiment 3 adopts the constitution where each of the transmission sections covers only a mutually independent band, and the transmission sections cover the entire system band in cooperation with each other.

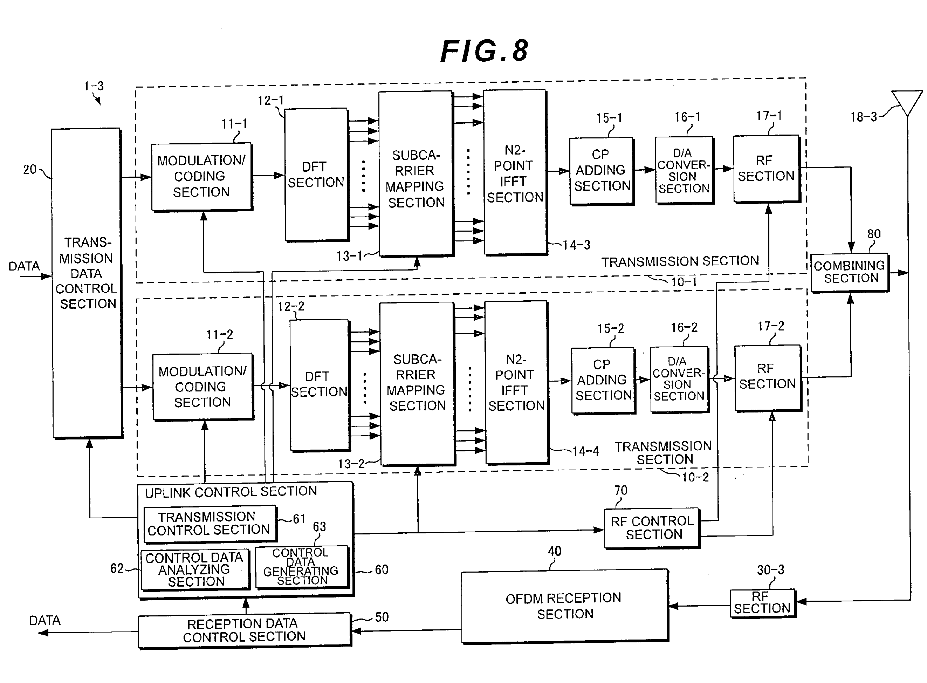

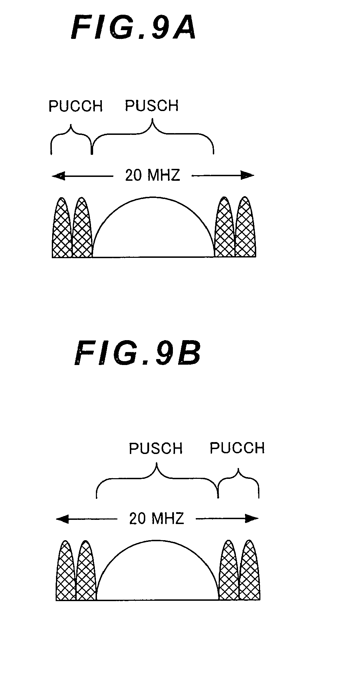

FIG. 8 is a block diagram illustrating a schematic configuration of a mobile station apparatus according to Embodiment 3. Further, FIGs. 9A and 9B are diagrams illustrating the system band of the mobile station apparatus according to Embodiment 3. As shown in FIG. 8, the mobile station apparatus according to Embodiment 3 has two transmission sections (10-1, 10-2). The transmission section 10-1 is capable of performing transmission using the basic system band as shown in FIG. 9A, and the transmission section 10-2 is capable of performing transmission using the basic system band as shown in FIG. 9B. Then, by using two transmission sections 10-1, 10-2, it is possible to perform transmission in the entire system band.

As shown in FIG. 8, as in the mobile station apparatus 1-2 according to Embodiment 2 as shown in FIG. 6, the mobile station apparatus 1-3 according to Embodiment 3 is comprised of the transmission data control section 20, modulation/coding sections 11-1, 11-2, DFT (Discrete FourierTransform) sections 12-1, 12-2, subcarrier mapping sections 13-1, 13-2, N2-point IFFT (Inverse Fast Fourier Transform) sections 14-3, 14-4, CP (Cyclic Prefix) adding sections 15-1, 15-2, D/A (digital/analog) conversion sections 16-1, 16-2, RF (Radio Frequency) sections 17-1, 17-2, a single antenna 18-3, (reception) RF section 30-3, OFDM reception section 40, reception data control section 50, uplink control section 60, RF control section 70 and combining section 80. The uplink control section 60 is comprised of the transmission control section 61, control data analyzing section 62, and control data generating section 63.

The difference from Embodiment 2 as shown in FIG. 6 is that one antenna 18-3 is provided and that respective outputs of the RF sections 17-1, 17-2 are combined in the combining section 80.

In downlink, as shown in FIG. 3, when the base station apparatus assigns two items of data to the mobile station apparatus in downlink, and the mobile station apparatus receives the data and transmits a response by single-carrier, it is not possible to transmit a response to each of the items of data. In transmitting the response, two responses are made a single response to be transmitted. In this case, when the control data generating section 63 of the uplink control section 60 acquires the data reception information from the reception data control section 50, the section 63 instructs the transmission data control section 20 to return responses at two positions. The control data generating section 63 generates a response (success/failure) to the downlink data, and outputs the response data to the transmission control section 20. Further, the section 63 sets each of the modulation/coding sections 11-1, 11-2 for a modulation scheme and code rate, and gives instructions for the arrangement of the response data to each of the subcarrier mapping sections 13-1, 13-2.

Specific descriptions are given with reference to FIGs. 3, 4A and 4B. The mobile station apparatus 1-3 (UE1) receives the downlink data at the positions of PDSCH as shown in FIG. 3. When both of data reception succeeds or fails, the reception data control section 50 instructs the uplink control section 60 to transmit a response (success/failure) to D1 at the position of C1 as shown in FIG. 4A, and further transmit a response (success/failure) to D2 at the position of C6 as shown in FIG. 4A. The control data generating section 63 of the uplink control section 60 generates the responses to the downlink data instructed from the reception data control section 50, and outputs the generated response data to the transmission data control section 20. Then, the control data generating section 63 instructs the transmission data control section 20 to transmit the response data to D1 using the transmission section 10-1, and further transmit the response data to D2 using the transmission section 10-2. Then, section 63 gives instructions for modulation and code rate to the modulation/coding sections 11-1, 11-2, and instructs the subcarrier mapping sections 13-1, 13-2 to map the response data to C1 and C6. Further, the control data generating section 63 instructs the RF control section 70 to set the transmission section 10-1 for a frequency w1, and further set the transmission section 10-2 for a frequency w2. Then, the response data is output from the transmission sections 10-1, 10-2, combined in the combining section 80, and transmitted from one antenna.

Moreover, the example as shown in FIG. 4B is similar to that in FIG. 4A. In other words, the RF control section 70 sets the transmission section 10-1 for the frequency w1, while setting the transmission section 10-2 for the frequency w2. Then, the response data to D1 as shown in FIG. 3 is transmitted at the position of C1. Meanwhile, the response data to D2 as shown in FIG. 3 is transmitted at the position of C3.

As described above, according to this Embodiment, it is possible to concurrently transmit two or more responses. In other words, when uplink control data such as a response to downlink data, downlink CQI and request for uplink data transmission occurs at the same time and the concurrently occurring control data is desired to be transmitted at the same time, by using separate transmission sections, it is possible to concurrently transmit different uplink control data at different locations. Further, since the different transmission sections are used, each of the transmission sections performs single-carrier transmission. By this means, it is possible to control the PAPR to within low levels.

Described next is the case that the mobile station apparatus transmits uplink data. FIGs. 5A to 5C are diagrams illustrating operation examples in the case that the mobile station apparatus transmits data in uplink. First, the mobile station apparatus 1-3 (UE1) is instructed from the base station apparatus to transmit the uplink data at the positions as shown in FIG. 5A. In other words, the apparatus 1-3 receives uplink scheduling information assigned to the Physical Downlink Control Channel PDCCH. The reception data control section 50 outputs the control data of the Physical Downlink Control Channel PDCCH to the uplink control section 60. The control data analyzing section 62 of the uplink control section 60 analyzes the control data of the Physical Downlink Control Channel. When the control data analyzing section 62 determines that it is possible to transmit the data on U1 and U4 as a result of analysis, the section 62 outputs the arrangement information and modulation/coding information of the uplink transmission data to the transmission control section 61 of the uplink control section 60. The transmission control section 61 instructs the transmission data control section 20 to transmit the position U1 using the transmission section 10-1, and further transmit U4 using the transmission section 10-2, gives instructions for modulation/code rate to the modulation/coding sections 11-1, 11-2, and gives instructions for the positions to map the uplink data to the subcarrier mapping sections 13-1, 13-2. Further, the control data generating section 63 of the uplink control section 60 instructs the RF control section 70 to set the transmission section 10-1 for the frequency w1, and further set the transmission section 10-2 for the frequency w2. Then, each of the transmission sections 10-1, 10-2 transmits the uplink transmission data from one antenna 18-3.

Further, the example as shown in FIG. 5B is similar to that in FIG. 5A. In other words, in FIG. 5B, the mobile station apparatus 1-3 (UE1) is instructed to transmit the uplink data at the positions as shown in FIG. 5B from the base station apparatus. The RF control section 70 sets the transmission section 10-1 for the frequency w1, while setting the transmission section 10-2 for the frequency w2. Then, the mobile station apparatus transmits the position U1 from the transmission section 10-1, while transmitting U2 from the transmission section 10-2, using one antenna 18-3.

As described above, according to this Embodiment, it is possible to concurrently transmit two or more items of data at different locations. Further, since the different transmission sections are used, each of the transmission sections performs single-carrier transmission. By this means, it is possible to control the PAPR to within low levels.

Described next is the case of transmitting uplink data in normal MIMO. As shown in FIG. 5C, the mobile station apparatus 1-3 (UE1) is instructed to transmit the uplink data in MIMO at the location as shown in FIG. 5C from the base station apparatus. In other words, the apparatus 1-3 receives uplink scheduling information assigned to the Physical Downlink Control Channel PDCCH. The reception data control section 50 outputs the control data of the Physical Downlink Control Channel PDCCH to the uplink control section 60.

The control data analyzing section 62 of the uplink control section 60 analyzes the control data of the Physical Downlink Control Channel. When the control data analyzing section 62 determines that it is possible to transmit the data on U1 using MIMO as a result of analysis, the section 62 outputs the arrangement information and modulation/coding information of the uplink transmission data to the transmission control section 61 of the uplink control section 60. The transmission control section 61 instructs the transmission data control section 20 to transmit the position U1 using the transmission section 10-1, and similarly transmit U1 using the transmission section 10-2. Then, the section 61 gives instructions for modulation/code rate to the modulation/coding sections 11-1, 11-2, and further gives instructions for coding for MIMO. The section 61 gives instructions for the position to map the uplink data to the subcarrier mapping sections 13-1, 13-2. The control data generating section 63 of the uplink control section 60 instructs the RF control section 70 to set the transmission section 10-1 and the transmission section 10-2 for the frequency w1. The RF control section 70 instructs each of the RF sections 17-1, 17-2 to set the band of the designated frequency. The RF sections 17-1, 17-2 up-convert the signals to signals of the designated radio frequency. Then, the uplink transmission data from each of the transmission sections 10-1, 10-2 is transmitted from one antenna 81-3.

As described above, according to this Embodiment, it is possible to perform single-carrier transmission for each band only by a single antenna. Further, it is possible to cover the entire system band, while enabling the mobile station apparatus to perform MIMO transmission. Furthermore, the number of points of IFFT is a low number, and it is thereby possible to reduce the circuit scale.

### (Embodiment 4)

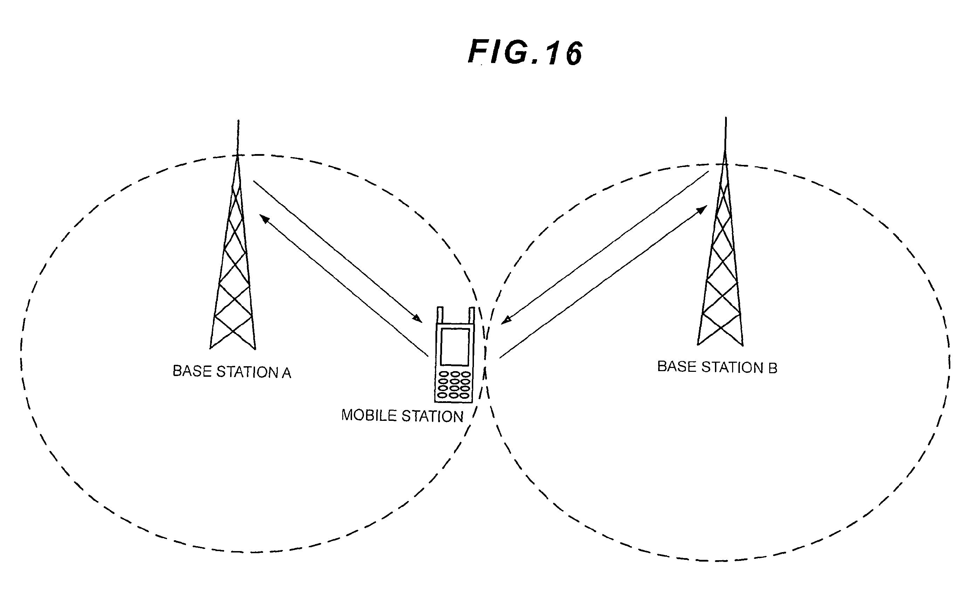

Embodiments 1 to 3 show the examples of one base station apparatus and one mobile station apparatus, and this Embodiment describes an example of a plurality of base station apparatuses and one mobile station apparatus. FIG. 16 is a diagram illustrating an example in the case that two base station apparatuses and one mobile station apparatus perform network MIMO. The network MIMO described herein means techniques for enabling simultaneous space multiplexing transmission of different signal sequences even in the same frequency interference environment as in normal MIMO, by using a plurality of antennas of a plurality of base station apparatuses and a plurality of antennas of the mobile station apparatus. The network MIMO uses that a plurality of different propagation paths is formed by reflection objects in between transmission and reception stations, and by using information of the plurality of transmission paths effectively, is to demodulate a plurality of signal sequences that are spatially multiplexed. In this case, the mobile station apparatus needs to return the downlink CQI indicative of downlink radio propagation path status and a response to downlink data to a plurality of base station apparatuses.

In addition, as a configuration of the mobile station apparatus, it is possible to use any one of the configurations of the mobile station apparatuses shown in Embodiments 1 to 3. Herein, descriptions are made using the configuration of the mobile station apparatus shown in Embodiment 1.

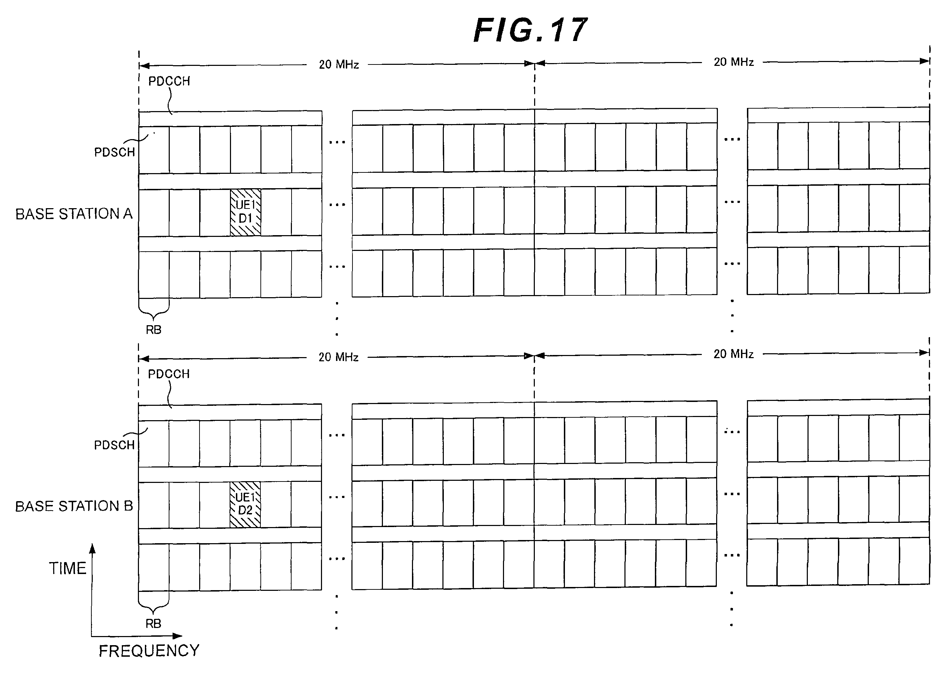

FIG 17 is a diagram illustrating the case where each of the base station apparatuses A and B assign the data to the mobile station apparatus in downlink, and the mobile station apparatus receives the data. Herein, in the case of single-carrier transmission, it is not possible to transmit a response to each of the data. In this case, when the control data generating section 63 of the uplink control section 60 acquires the data reception information from the reception data control section 50, the section 63 instructs the transmission data control section 20 to return responses at positions of two uplink control channels.

The control data generating section 63 generates a response to the downlink data, and outputs the response data to the transmission control section 20. Further, the section 63 sets each of the modulation/coding sections 11-1, 11-2 for a modulation scheme and code rate, and gives instructions for the arrangement of the response data to each of the subcarrier mapping sections 13-1, 13-2.

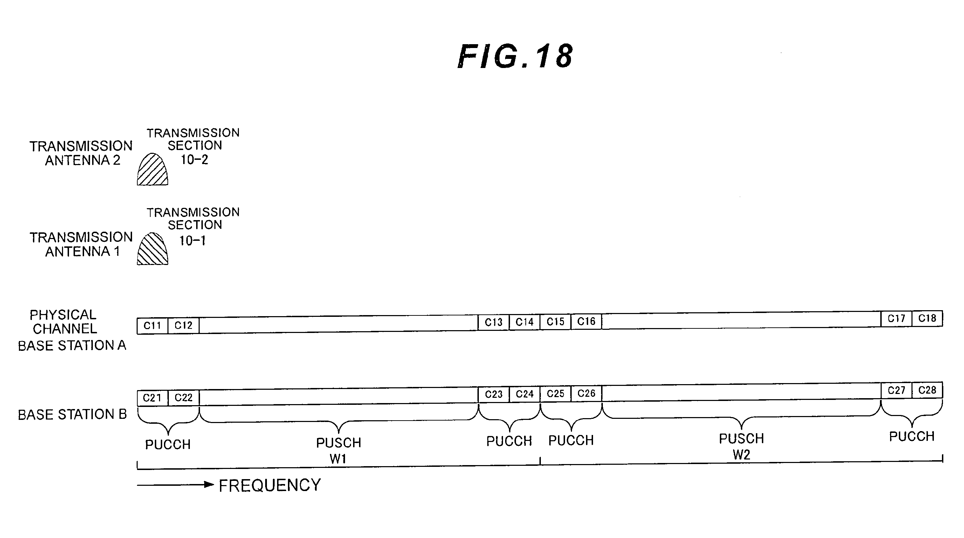

FIG. 18 is a diagram illustrating operation examples in the case that the mobile station apparatus transmits the controldatainuplink. The mobile station apparatus 1-1 (UE1) receives the downlink data (D1, D2) at the positions of PDSCH as shown in FIG. 17. When both of data reception succeeds or fails, the reception data control section 50 instructs the uplink control section 60 to transmit a response (success/failure) to D1 at the position of C11 as shown in FIG. 18, and further transmit a response (success/failure) to D2 at the position of C21 as shown in FIG. 18. The control data generating section 63 of the uplink control section 60 generates the responses to the downlink data instructed from the reception data control section 50, and outputs the generated response data to the transmission data control section 20.

Then, the control data generating section 63 instructs the transmission data control section 20 to transmit the response data to D1 using the transmission section 10-1, and further transmit the response data to D2 using the transmission section 10-2, gives instructions for modulation and code rate to the modulation/coding sections 11-1, 11-2, and instructs the subcarrier mapping sections 13-1, 13-2 to map the response data to C11 and C21. Then, each of the transmission sections 10-1, 10-2 transmits the response data.

In addition, this Embodiment shows the configuration with two antennas, and enables mobile station apparatuses with antennas more than or equal to the number of antennas of the base station apparatus to perform the above-mentioned operation. Further, each response data may be multiplied by scramble code to identify the base station apparatus.

As described above, according to this Embodiment, it is possible to concurrently transmit two or more responses. In other words, when uplink control data such as a response to downlink data, downlink CQI and request for uplink data transmission occurs at the same time and the concurrently occurring control data is desired to be transmitted at the same time, by using separate transmission sections, it is possible to concurrently transmit different uplink control data at different locations. Further, since the different transmission sections are used, each of the transmission sections performs single-carrier transmission. By this means, it is possible to control the PAPR to within low levels.

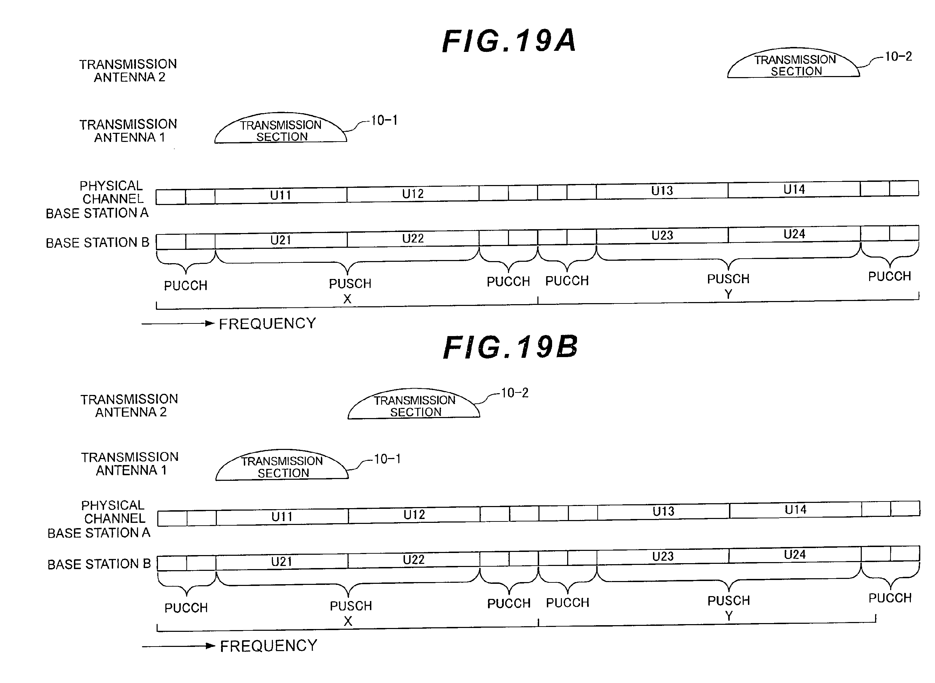

Described next is the case that the mobile station apparatustransmitsuplinkdata. FIGs. 19A to 19C are diagrams illustrating operation examples in the case that the mobile station apparatus transmits data in uplink. First, the mobile station apparatus 1-1 (UE1) is instructed from the base station apparatus to transmit the uplink data at the positions as shown in FIG. 19A. In other words, the apparatus 1-1 receives uplink scheduling information assigned to the Physical Downlink Control Channel PDCCH. In addition, each of the base station apparatuses may transmit the uplink scheduling information on the Physical Downlink Control Channel PDCCH, or one of the base station apparatuses may transmit the uplink scheduling information using the Physical Downlink Control Channel PDCCH.

The reception data control section 50 outputs the control data of the Physical Downlink Control Channel PDCCH to the uplink control section 60. The control data analyzing section 62 of the uplink control section 60 analyzes the control data of the Physical Downlink Control Channel. When the control data analyzing section 62 determines that it is possible to transmit the data on U11 and U24 as a result of analysis, the section 62 outputs the arrangement information and modulation/coding information of the uplink transmission data to the transmission control section 61 of the uplink control section 60. The transmission control section 61 instructs the transmission data control section 20 to transmit the position U11 using the transmission section 10-1, and further transmit U24 using the transmission section 10-2. Then, the section 61 gives instructions for modulation/code rate to the modulation/coding sections 11-1, 11-2, and gives instructions for the positions to map the uplink data to the subcarrier mapping sections 13-1, 13-2. Then, each of the transmission sections transmits the uplink transmission data.

Further, the example as shown in FIG. 19B is similar to that in FIG. 19A. In other words, in FIG. 19B, the mobile station apparatus 1-1 (UE1) is instructed to transmit the uplink data at the positions as shown in FIG. 19B from the base station apparatus. Then, the mobile station apparatus transmits the position U11 using the transmission section 10-1, while transmitting U22 using the transmission section 10-2.

In addition, this Embodiment shows the configuration with two antennas, and the case of three or more antennas is in the same manner.

As described above, according to this Embodiment, it is possible to concurrently transmit two or more items of data at different locations. Further, since the different transmission sections are used, each of the transmission sections performs single-carrier transmission. By this means, it is possible to control the PAPR to within low levels.

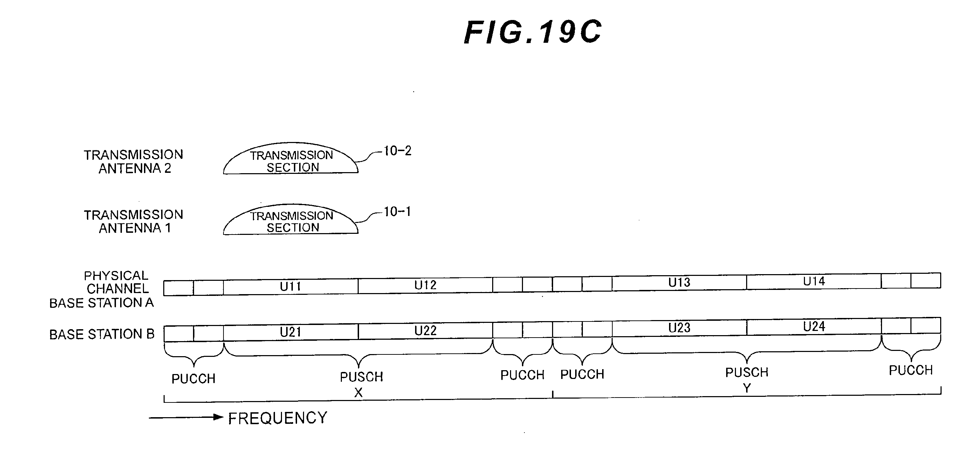

Described next is the case of transmitting uplink data in normal MIMO. As shown in FIG. 19C, the mobile station apparatus 1-1 (UE1) is instructed to transmit the uplink data in MIMO at the location as shown in FIG. 19C from the base stationapparatus. In other words, the apparatus 1-1 receives uplink scheduling information assigned to the Physical Downlink Control Channel PDCCH. The reception data control section 50 outputs the control data of the Physical Downlink Control Channel PDCCH to the uplink control section 60.

The control data analyzing section 62 of the uplink control section 60 analyzes the control data of the Physical Downlink Control Channel. When the control data analyzing section 62 determines that it is possible to transmit the data on U11 and U21 using MIMO as a result of analysis, the section 62 outputs the arrangement information and modulation/coding information of the uplink transmission data to the transmission control section 61 of the uplink control section 60. The transmission control section 61 instructs the transmission data control section 20 to transmit the position U11 using the transmission section 10-1, and similarly transmit U21 using the transmission section 10-2. Then, the section 61 gives instructions for modulation/code rate to the modulation/coding sections 11-1, 11-2, and further gives instructions for coding for MIMO. The section 61 gives instructions for the positions to map the uplink data to the subcarrier mapping sections 13-1, 13-2. Then, each of the transmission sections transmits the uplink transmission data.

As described above, according to this Embodiment, by adaptively controlling the transmission sections that perform MIMO transmission using a plurality of antennas, it is possible to concurrently transmit a plurality of items of data to a plurality of base station apparatuses while maintaining single-carrier characteristics. Further, this Embodiment is applicable similarly to the configurations of the mobile station apparatuses of Embodiment 2 and Embodiment 3.

In addition, the mobile station apparatus as shown in this Embodiment may notify the base station apparatuses of the capability, form and the like of the mobile station apparatus in starting communications with the base station apparatuses. In this case, the base station apparatuses are capable of performing downlink and uplink scheduling in accordance with the capability and form of the mobile station apparatus.

## Claims

1. A mobile station apparatus that transmits data to at least one of base station apparatuses using one of a plurality of single-carriers each having a predetermined frequency bandwidth in a system band, comprising:
a plurality of transmission sections (10-1, 10-2) each of which transmits one single-carrier independently of one another; and
a transmission data control section (20) that controls so that the each of the transmission sections (10-1,10-2) transmits one physical channel using one of the single-carriers having mutually different frequency bands at a predetermined time interval.

2. The mobile station apparatus according to claim 1, wherein the transmission data control section (20) selects one single-carrier from the number of single-carriers that is the number of transmission sections or less among the plurality of single-carriers having mutually different frequency bands in the system band, and performs control so that one of the transmission sections transmits the selected single-carrier.

3. A mobile communication system comprising:
the mobile station apparatus according to claim 1 or 2; and
at least one of base station apparatuses.

4. A transmission method in which a mobile station apparatus transmits data to a base station apparatus using one of a plurality of single-carriers each having a predetermined frequency bandwidth,
wherein each of a plurality of transmission sections each of which transmits one single-carrier independently of one another transmits one physical channel using one of the single-carriers having mutually different frequency bands at a predetermined time interval.
